(19)

Europäisches
Patentamt
European
Patent Office
Office européen
des brevets

(11) **EP 1 845 468 B1**

(12) **EUROPEAN PATENT SPECIFICATION**

(45) Date of publication and mention
of the grant of the patent:
**17.07.2013  Bulletin 2013/29**

(51) Int Cl.:
***H04L  29/06*** *(2006.01)*      ***G06F 21/55*** *(2013.01)*

(21) Application number: **06007693.2**

(22) Date of filing: **12.04.2006**

(54) **Method, computer network system and gate for identifying and controlling unsolicited traffic**

Verfahren, System und eine Zugriffsvorrichtung zur Detektion und Steuerung von unerwünschtem Datenverkehr

Procédé, système et  portail pour détecter et contrôler de trafic non sollicité

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**17.10.2007  Bulletin 2007/42**

(73) Proprietor: **Deutsche Telekom AG**
**53113 Bonn (DE)**

(72) Inventors:
 • **Karrer, Roger, Dr.**
   **10555 Berlin (DE)**
 • **Kühn, Ulrich, Dr.**
   **10110 Berlin (DE)**

(74) Representative: **Blumbach Zinngrebe**
**Patentanwälte**
**Alexandrastrasse 5**
**65187 Wiesbaden (DE)**

(56) References cited:
**EP-A1- 1 284 558     US-A1- 2004 230 797**

 • **ANDERSON T ET AL: "PREVENTING INTERNET DENIAL-OF-SERVICE WITH CAPABILITIES" COMPUTER COMMUNICATION REVIEW, ACM, NEW YORK, NY, US, vol. 34, no. 1, January 2004 (2004-01), pages 39-44, XP001223359 ISSN: 0146-4833**

**Description**

Technical Field

The present invention relates to a method for identifying and controlling unsolicited traffic in a computer network system which comprises access networks for connecting sources and destinations, respectively, to a core network, like the Internet. The present invention further relates to a computer network system and a gate adapted to perform a method for identifying and controlling unsolicited traffic.

Backround of the Invention

The open design of the Internet has been a key factor for its growth and success. However, the ability to send anything to anybody at any time has shown to have severe drawbacks. The lack of authentication and security is increasingly exploited to inject unsolicited traffic into the network, leading to uncontrolled virus and worm spread and devastating Distributed Denial-of-Service (DDoS) attacks.

Viruses and worms have been shown to clog entire parts of the Internet by causing extensive traffic. Moreover, they can carry code that modifies or destroys infected end systems up to a complete loss of data or steal private data.

DDoS attacks aim at overloading a resource such that legitimate users are denied access to the resource. Well-known DDoS targets include, but are not limited to, Web servers and Internet Data Centers.

The damage caused by unsolicited traffic has rapidly increased in the past years and its damage exceeds today billions of dollars.

There already exist approaches which aim to protect end systems or end devices against unsolicited traffic such as Denial of Service Attacks, worms or virus.

The present invention aims at protecting network resources. In particular, access networks that have a significantly lower capacity than the core must be protected against unsolicited traffic. Protection includes the prevention of flooding attacks with unsolicited traffic (DDoS), such that legitimate traffic is no longer able to reach its destination due to exceeded network capacity, as well as the early prevention of unsolicited (malicious or infectious) traffic spreading into the core to infect other systems.

One known approach is based on statistical methods as, for example, disclosed by Y. Kim et al. in "Packetscore: statistics-based overload control against distributed denial-of-service attacks", Proceedings of IEEE INFOCOM'04, Hong Kong, March 2004.

Statistical methods require no user interaction that might annoy the user. However, the increasing sophistication of attacks, such as mimicking attacks as flash crowds or attack with specific traffic patterns, makes it significantly more difficult to address unsolicited traffic by statistical methods.

Further approaches are disclosed by S. Savage et al. in "Network support for IP-traceback", IEEE/ACM Transactions on Networking, 9(3):226-237, June 2001 and A. Yaar et al. "A stateless internet flow filter to mitigate DDoS flooding attacks; Proceedings of the IEEE Symposium on Security and Privacy, Oakland, CA, May 2004. In these approaches all or at least a large number of routers along a communication path within a network participate in the defending end systems against DDoS attacks. In practice, such solutions are slow to be deployed as they require changes by multiple providers or even support from routers in the network.

A still further solution is disclosed by X. Yang et al. in "A DoS-limiting network architecture", ACM SIGCOMM'05, Philadelphia, PA, August 2005. This solution requires a collaboration of multiple entities at the edge of an access network and a core network. Again, a deployment is slow and difficult to achieve in practice as it is difficult to imagine that multiple Internet Service providers (ISPs) exchange information, in particular regarding security-related issues.

A further approach to protect end devices against Denial-of-Service attacks is known wherein a source wanting to send data to a destination must first receive a permission to communicate prior to sending data. This permission to communicate is also termed capability. See for example the publication of T. Anderson et al. "Preventing Internet Denial-of-Service with capabilities", Proceedings of Hot Topics in Networking (HotNetsII), Boston, October 2003. The capabilities are used to authenticate sources on an end-to-end basis. This means, that the capabilities are issued by a destination after checking the legitimacy of a source, and thus traffic is checked for capabilities by the destination to protect end system resources. However, such an end-to-end scheme does not protect the access networks and the core network from unsolicited traffic. Therefore, DDoS attacks on an access network or malware spread into the core network are not addressed.

Furthermore, EP 1 284 558 B1 discloses a method and apparatus for limiting the effect upon certain clients that access an electronic merchant's server from a denial of service attack against the electronic merchant's server. Therefore, the e-merchant designates some clients as VIP clients, wherein a packet addressed to the e-merchant's server is marked for forwarding in a privileged class of services, if the source of the packet is a VIP client.

In US 2004/230797, a system is disclosed where traffic is checked whether it is validly marked.

Summary of the Invention

It is an object of the present invention to provide a method and a computer network system which are capable of preventing unsolicited traffic from spreading into the core network or preventing unsolicited traffic from overloading a destination's access network.

It is a major aspect of the invention to identify and control unsolicited traffic, in particular by limiting or entirely blocking unsolicited traffic in an access network or the core network, e. g. the Internet. In particular, the present invention relates to a computer network system and a method using authentication or permissions, also termed capabilities, to

a) thwart Distributed Denial of Service (DDoS) attacks against a destination's access network at the edge of a core network and thus by implication on servers, and
b) stop worm and virus spread prior to reaching the core network.

Therefore, the present invention based on edge-based capabilities protects the core network and/or a destinations' access network, whereas the above mentioned known schemes protect end systems or destination resources.

According to one aspect of the invention, the authentication authority uses state-of-the-art authentication techniques, such as CAPTCHAS as described by L. v. Ahn et al. in "CAPTCHA: Using Hard AI Problems for Security"; Advances in Cryptology-EUROCRYPT 2003, volume 2656 of Lecture Notes in Computer Science, pages 294-311, Springer Verlag and/or IP Puzzles as described by D. Dean et al. in "Using client puzzles to protect TLS", Proceedings of the 10th USENIX Security Symposium, Washington, D.C., August 2001 to transmit permission information to the sources. The sources, i.e. users and/or computers try to obtain the valid tagging key from the permission information, used for tagging packets to be sent to a destination.

It is a further aspect of the invention that the computer network system can be implemented readily, e.g. by a single Internet Service Provider (ISP). Owners of end systems connected to the ISP's network have the incentive to install the respective components of the present invention to profit from the protection against unsolicited traffic.

The above mentioned technical problem is solved by the methods according to claims 1 and 2.

The method according to claim 1 helps to thwart Distributed Denial of Service (DDoS) attacks against the second access network at the edge of a core network and thus by implication on servers.

The method according to claim 2 aims to stop worm and virus spread prior to reaching the core network.

Preferred embodiments are set forth in the dependent claims.

The above mentioned problem is also solved by a computer network system for identifying and controlling unsolicited traffic as defined in claim 10.

It is to be noted that the feature "traffic unit being marked invalidly" also covers traffic units which are not marked at all.

Preferred embodiments are set forth in dependent claim 11.

Brief Description of the Drawing:

Fig. 1    is a principle block diagram of a communication system showing the basic concept of the present invention;
Fig. 2    is a block diagram of a communication system adapted to thwart DoS attacks against a destination's access network;
Fig. 3    is a block diagram of a communication system adapted to stop worm and virus spread prior to reach the core network;
Fig. 4    is a block diagram showing the function modules associated to the respective components of the communication systems as depicted in Fig. 2 and 3;
Fig. 5    is a flowchart showing the steps performed at the gate.

Detailed Description

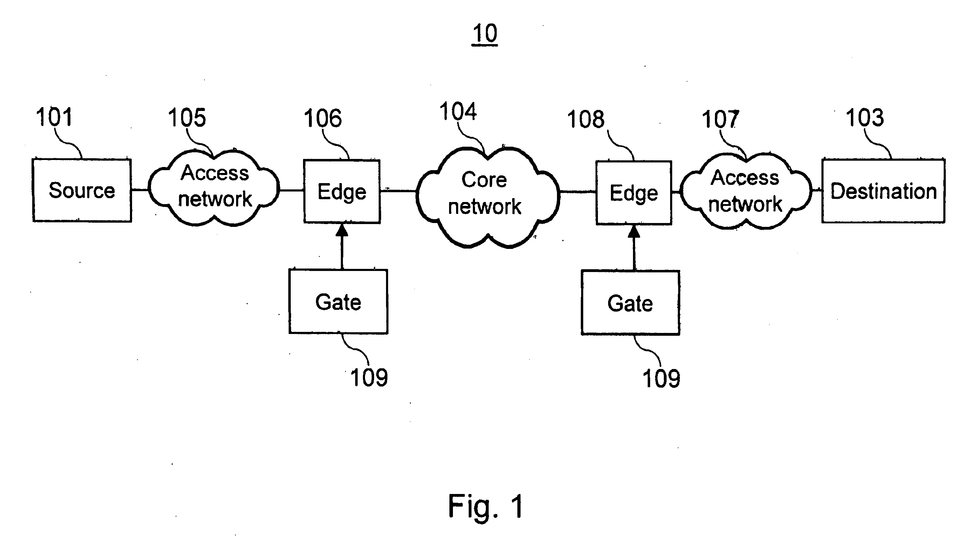

Fig. 1 shows a block diagram of a preferred communication system 10 based on a commonly used distributed networked system including an aspect of the present invention. The communication system 10 comprises end systems or end devices and a network. End systems are separated into sources 101 and destinations 103, wherein only one source and one destination are shown. The network is divided into a core network 104, e. g. the Internet, and access networks. In order to facilitate the illustration only a single source-side access network 105 and a single destination-side network 107 are shown. The conjunction of an access network and the core network is called edge. Thus, we distinguish between a source-side edge 106 and a destination-side edge 108. Each edge usually comprises one or multiple hardware components, such as routers. A common characteristic of the edges is that the network capacity is significantly different between an access network and the core network, i.e., the network capacity is one or several orders of magnitude smaller in the access networks 105, 108 than in the core network 104. Therefore, an access network is significantly more vulnerable to traffic flooding than the core network 104. Therefore, unsolicited traffic must be identified and controlled, e.g. limited or completely blocked, at an edge. For this purpose, a specific network element termed gate 109 is added to the network infrastructure at least at one edge, for example at the source side and/or the destination side that ensures that the network resources are available for legitimate traffic.

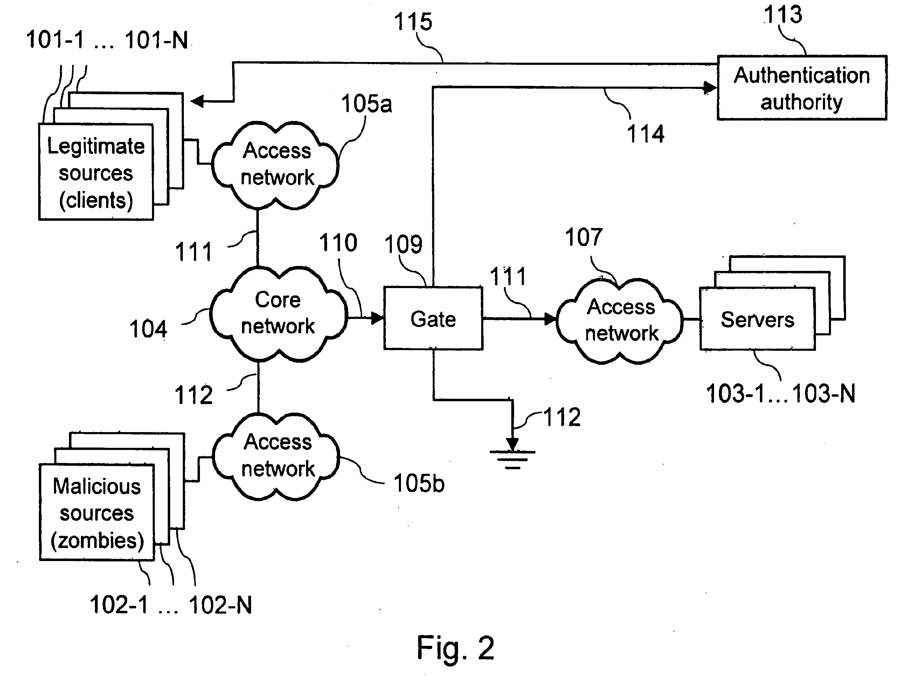

Fig. 2 shows a first preferred embodiment of a communication system as generally depicted in Fig. 1. This communication system comprises a gate 109 at a destination side edge of a core network 104, i. e. between an destination-side access network 107 and the core network 104. The destination-side access network 107 serves to connect destinations, e. g. Web servers 103-1 to 103-N to the core network 104. It is to be understood, that basically a plurality of destination-side access networks are connected to the core network 104. The gate 109 operates to protect the destination-side access network 107 against DDoS flooding attacks.

In this embodiment, legitimate sources 101-1 to 101-N, such as Web clients are connected to the core network 104 via a source-side access network 105a, whereas malicious sources (zombies) 102-1 to 102-N are connected to the core network 104 via a separate access network 105b. In Fig. 2, wanted traffic generated by the legitimate sources 101-1 to 101-N is designated by reference number 111, whereas unsolicited traffic generated by the malicious sources 102-1 to 102-N is designated by reference numbers 112. It will be described later how clients are identified and distinguished as legitimate sources and malicious sources, respectively.

The attack or unsolicited traffic 112 from the malicious sources 102 to 102-N sent to one or multiple destinations 103-1 to 103-N converges at the edge joining the core network 104 with the destination-side access network 107. Without gate 109, the access network 107 with its lower capacity can be flooded with unsolicited traffic 112.

In the communication system, whenever a source wants to communicate with a destination, it must first receive a permission to communicate. This permission to communicate is also termed capability in literature. The permission 115 is generated and forwarded to one or more sources by a specific software module called authentification authority 113. The authentification authority 113 might be implemented in one or more destinations 103 to 103-N or in a separate device associated to the gate 109. By generating and forwarding permissions to sources wishing to communicate with destinations the sources become implicitly authenticated, i. e. legitimate sources, only if they are able to obtain a valid tagging key from the received permission. This procedure will be explained below in detail. With other words, capabilities or permissions are used to authenticate sources implicitly. A legitimate source uses the tagging key included in the permission to tag packets to be sent to a destination.

With gate 109, the attack traffic 112 is identified and can be filtered out such that only a controllable number of legitimate packets 111 are forwarded from the core network 104 to the access network 107. The unsolicited traffic 112 filtered out by the gate 109 is symbolically depicted by a ground symbol.

Additionally or alternatively, the amount of attack traffic 112 flowing through the access network 107 can be controlled by the gate 109 in dependence of the condition of the access network 107. The gate 109 identifies traffic as unsolicited traffic if the received packets do not contain a valid tag generated on the basis of the permission.

Furthermore, as will be described later, the gate 109 uses a key generation algorithm to generate tagging keys. The tagging keys are transported to the authentication authority 113 which forwards the permission and the tagging key or portion of the key to the sources. Only sources which work correctly are able to calculate the tagging key from the permission which is then used to tag or mark packets to be sent to respective destinations.

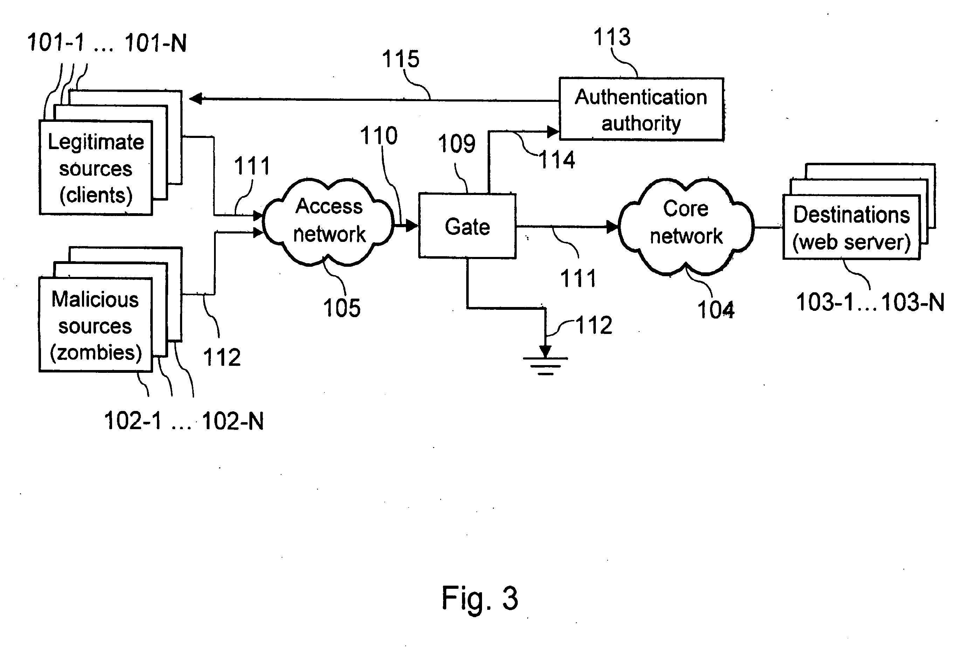

Fig. 3 shows a second embodiment of a communication system. This communication system differs from that shown in Fig. 2 in that a gate 109 is arranged at a source side edge of a core network 104, i.e. between a source-side access network 105 and the core network 104. Assume that malware, e. g. a virus or a worm has infected a set of sources 102-1 to 102-N, for example computers and replicates itself with horrendous speed to infect other source computers. These source computers 102-1 to 102-N will fail to obtain a correct permission generated by and received from an authentication authority 115. Assume further, that the malware 112 spreads via email. Gate 109 is adapted to automatically determine whether an email 111 has been sent by a legitimate source 101-1 to 101-N or by a malicious computer 102-1 to 102-N. Only emails 111 sent by a legitimate source 101 to 101-N have been marked correctly and will pass the gate 109. Therefore, the malware which are not marked or carrying an invalid tag can be identified as unsolicited traffic 112 and prevented from spreading past the gate 109 into the Internet 104.

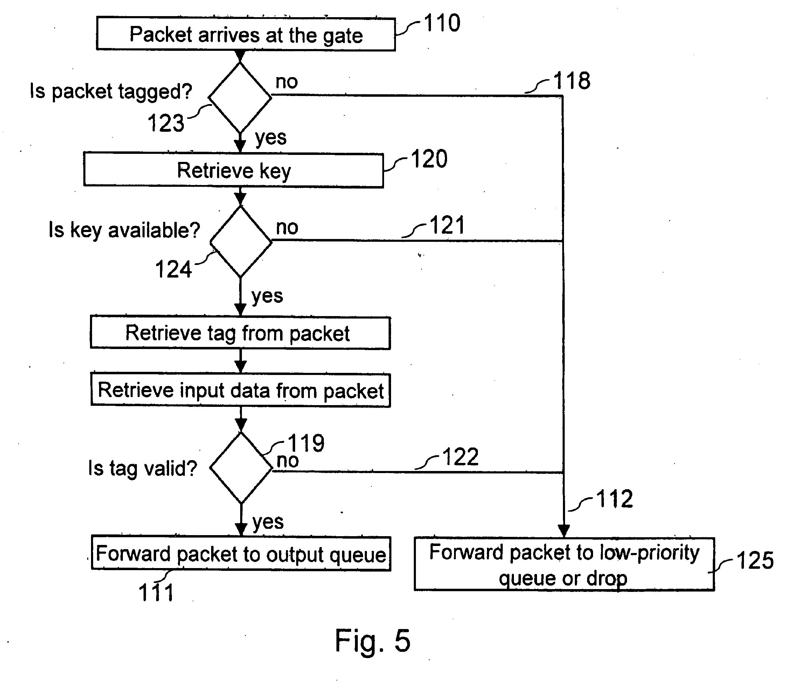

The internal operation of the gate 109 as shown in Fig. 2 and 3 is depicted in Fig. 5. The gate 109 has the ability to identify and control, e.g. filter out or limit unsolicited traffic. When a packet 110 arrives from sources 101 or 102 at the gate 109, the gate 109 first checks in step 123 whether the packet contains a tag. If the packet contains a tag, then the gate 109 retrieves in step 120 a tagging key previously generated for a given session. If a suitable tagging key is available, the gate 109 uses the tagging key to determine in step 124 whether or not the packet includes a valid tag. If the tag is valid, the packet 111 can be forwarded immediately to an output queue of the gate 109.

If, however, a tag is not included in a packet 118 or not valid 122 or a tagging key is not available 121 in the gate 109, the packet is considered as an unsolicited or a malicious packet 112 and thus will be filtered or controlled 125 by the gate 109. The term "filtered" or "controlled" 125 can be interpreted and implemented in various ways. Examples include, but are not limited, to simply drop unsolicited packets 112 or to forward them to a low-priority queue 125. An efficient solution is required such that the gate 109 does not slow down the traffic in the destination's access network 107 or in the core network 104. Furthermore, the solution needs to scale to a large number of flows.

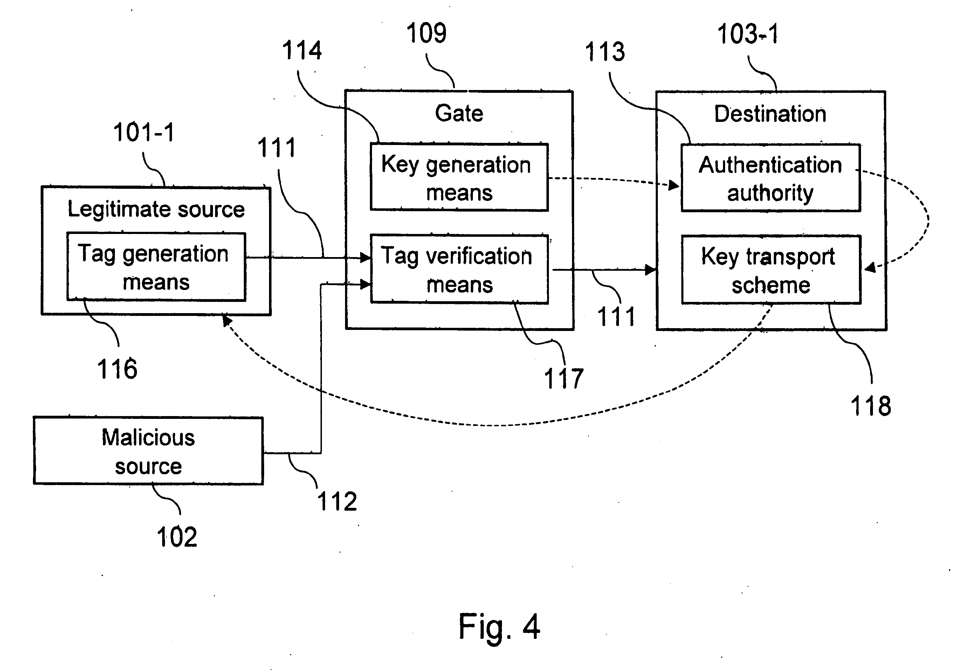

As a brief overview, the capability exchange for legitimating sources to send wanted traffic 111 involves three independent components: sources which must acquire a capability, the authentication authority 113 to issue and forward capabilities and the gate 109 to check capabilities in order to identify and control unsolicited traffic. The general concept is shown in Fig. 4.

For this purpose, the gate 109 uses a tagging scheme for verifying packets and a keying scheme for generating tagging keys. The keying scheme can be implemented in key generation means 114 and the tagging scheme can be located in a tag verification means 117, both located within the gate 109.

Furthermore, a key transport scheme is used by the authentication authority 113. The key transport scheme can be implemented in a key transport means 118. In a preferred embodiment both the authentication authority 113 as well as the key transport scheme are implemented in one or more of the destinations 103-1 to 103-N. In addition, a tagging scheme is used by the sources to generate tags and embed them into packets to be sent. Therefore, tag generating means 116 can be implemented in each source to perform the tagging scheme. A detailed description of these schemes will be given below.

In a first step, a tagging key is generated by the key generation means 114 of the gate 109. Derivations of this key are passed to the authentication authority 113. The authentication authority 113 is a logical unit or software module that may be mapped onto an independent device, or may be collocated with other devices, such as the server 103-1. The authentication authority 113 is adapted to implicitly authenticate clients 101. This is done by generating a permission or a capability, for example in form of a challenge which includes a tagging key or a portion of a tagging key that is valid for a single session. The challenge is forwarded to the sources 101 and 102. Each source tries to solve the received challenge for obtaining a valid tag which is used to mark packets to be sent to destinations. In the gate 109 packets marked with a valid tag are considered as a legitimate traffic 111 whereas traffic without a tag or with an invalid tag are identified as unsolicited traffic 112 and thus filtered respectively, as shown in Fig. 2, 3 and 5.

An illustrative operation of the computer network system as shown in Fig. 2 will be described in more detail.

This computer network system is adapted to prevent the access network 107 from DDoS attacks, but as mentioned above, it can be used for other scenarios as well.

It is assumed, that the destinations 103-1 to 103-N are servers, that the sources 101-1 to 102-N are client computers and that the authentication authority 113 is located in at least one of the servers 103.

In a preferred embodiment, the Keying Scheme built into the key generation means 114 is responsible for generating a key at the gate 109 and communicating it to one or more of the servers 103-1 to 103-N or, in general, the authentication authority 113. It is important to realize that the gate 109 defines and manages keys and exchanges them with the servers, but not vice versa. The key sent to the server 103-1 is server-specific. The server 103-1 stores its key locally. Once the server 103-1 receives a request from a client, e. g. client 101-1, it derives a session-specific key as a tagging key to be sent to the sources.

The Key Transport Scheme associated to the authentication authority and implemented for example in the server 103-1 is responsible for communicating the session or tagging key to clients, e.g. in form of a challenge generated by the authentication authority 113. When the user of the client 101-1 and/or the client itself solves this challenge, the client 101-1, the user uses, is considered as authenticated.

In the present embodiment, the clients 101-1 to 101-N are assumed to be able to solve the received challenge correctly and thus are legitimated or authenticated. It is assumed that the clients 102-1 to 102-N are not able to solve the received challenge correctly and thus are considered as zombies.

The Tagging Scheme implemented in the clients allow the legitimate clients to embed a tag in each packet it send, after being authenticated and after obtaining a tagging key by solving the challenge correctly.

At gate 109, the Tagging Scheme defines how the gate 109 verifies the tags included in the packets with information stored at the gate 109.

In the following, we describe the three schemes in detail. For the description we introduce the following notation:
*Notation 1:* For an IP packet $P$ we use $IP_s(P)$, $IP_d(P)$, Ident(P), Flow(P), Len(P) to denote the respective header fields source address, destination address, identification (in IPv4), flow label (in IPv6), and payload length of the packet. Likewise, we use $Port_s(P)$, $Port_d(P)$, Seq(P), Ack(P) to denote the source port, destination port, sequence and acknowledge number in case that P is a TCP packet.

*Notation 2:* For a bitstring $X$ let $[X]_r$ denote the leftmost r bits of X; if X has less than r bits, it is filled up by zero bits. Let $[X]_{r,s}$ with $r \leq s$ denote the sub-bitstring consisting of the bits $r,...,s,$ filled up by zeroes if necessary.

## 1. Keying Scheme

In the following two schemes are described for tagging key generation and management for the gate, servers, and clients. The first scheme, which is called *stateless keying,* derives all tagging keys from a central master key held at the gate 109. In the second scheme the gate 109 needs to keep some state for each flow routed through it.

### a) Stateless Keying

In this keying scheme, the gate 109 has a central master or gate key $k_G$. As all other keys are derived from this key it is kept secret at all times. The scheme further uses two key derivation functions $KDF_1$, $KDF_2$ to derive server keys and session or client keys. Session keys are also termed tagging keys. Given a server S with address IP(S), its key is

$$k_S \leftarrow KDF_1(k_G, IP(S))$$

Furthermore, for a client C with address IP(C), the tagging key used to tag any packet sent to server S is

$$k_{C,S} \leftarrow KDF_2(k_S, IP(C), IP(S))$$

The interface to the tag verification means 117 in the gate 109 can be easily implemented using these functions. Note that the client does only receive $k_{c,s}$, so it does not need to know about $KDF_1$, $KDF_2$.

Adding a cache (not shown) in the gate 109 for the results of key derivation does not affect the property that the scheme is stateless. However, it does improve computational efficiency of the scheme. We use two LRU (least recently used) tables in the gate 109 holding entries (IP($S$),$k_S$) and (IP(S), IP(C), $k_{c,s}$). That way we can amortize the computational complexity of the tagging key derivation over a significant number of tag verifications while the tables are easy to maintain. The achievable improvement in computation time depends on available memory at the gate 109 and the number of different flows passing the gate at any single time.

### b) Keying with State at the Gate

Rather than deriving all the keys from a single master key kept at the gate 109, the gate 109 could issue a new tagging key for each single connection it encounters. In the following we describe how such an alternative keying scheme could work.

In this scheme the gate 109 generates a session or tagging key k whenever it sees a connection initiation involving a client C and a server 5 pass by, i.e. in form of a SYN packet. It then stores k along with (C, S) and other information identifying the flow, e.g. port numbers, for future use.

Then the gate 109 passes on the tagging key to the respective server in which the authentication authority 113 is implemented such that the server can transport it to the client. This requires that the session or tagging key $k$ is encrypted with some key $k_s$ shared between the gate 109 and the server 103-1. The communication between the gate 109 and the server 103-1 can be done in-band, i.e. by adding the encrypted key to the original SYN packet of the client 101-1 before passing it on to the server 103-1. To expire session keys the gate 109 has to watch the connection and know about protocol timeouts. This requires a similar state-keeping as in a stateful-inspection firewall.

### c) Selection of Algorithms and Parameters

For the stateless keying scheme the key sizes as well as the key derivation functions need to be specified. Given that we select CBC-MAC with AES and a key size of 128 bits for the tagging scheme, it is reasonable also use these parameters for the keying scheme. Furthermore, the key derivation functions $KDF_1$, $KDF_2$ can be implemented using CBC-MAC, given that it is a good pseudorandom function. This function is described, for example, by M. Bellare et al. "The security of the cipher block chaining message authentication code.", Journal of Computer and Systems Sciences, 61(3):362-399, December 2000. This way no additional code needs to be added. Concretely,

$$KDF_1(k_G, IP(S) := CBC - MAC[AES]_{k_G}(c_1 \| IP(S)),$$

$$KDF_2(k_S, IP(C), IP(S)) := CBC - MAC[AES]_{k_S}(c_2 \| IP(C) \| IP(S))$$

using two different constants $c_1$, $c_2$ for separating the input to the encryption function. We use constants of 12 or 8 octets each. The performance of these functions is then as follows: For IPv4 the IP adress(es) and constants result in inputs of 16 octets for $KDF_1$ resp. $KDF_2$, i.e. a single block cipher operation. For IPv6 the IP address(es) and constants result in inputs of 28 or 40 octets, resulting in $KDF_1$ resp. $KDF_2$ using 2 or 3 block cipher operations. Furthermore, a key scheduling operation is needed when putting the resulting key to use.

2. Key Transport Scheme

In this section we propose methods to transport the cryptographic key generated by the gate 109 from the server 103-1 or authentication authority 113 to the client 101-1 at the start of the respective connection. The client uses this key to tag each packet to be sent to a server.

We employ the general idea of a CAPTCHA test (Completely Automated Public Turing Test to tell Computers and Humans Apart) to distinguish between a human user and a machine or client. The CAPTCHA test is for example described by L.v.Ahn et al. in "CHAPTCHA: Using Hard AI Problems for Security", Advances in Cryptology-EUROCRYPT 2003, vol. 2656 of Lecture Notes in Computer Science, pages 294-311, Springer Verlag.

This way our scheme ensures that human users can still access a server even under attack. On the other hand, a malicious client, e.g. 102-1, that is potentially part of a DDoS attack network, and that can therefore not rely on help of a human user, is not able to get a valid tagging key.

The CAPTCHAs were originally designed as tests. In this embodiment, we use a subclass of those problems that allow the user to input some information derived from a given artificial intelligence (AI) problem. In particular, such an AI problem is called a challenge. The challenge is generated by the authentication authority 113 using a tagging key received by the gate 109. The challenge including the tagging key is then transmitted to the clients 101 and 102.

Then we use this input for a computation that will give a cryptographic key to the client computer.

One problem we face here is that probably only a minor fraction of potential user is willing to input the equivalent of a 128-bit tagging key, which is a tedious and error-prone task, e.g. reading the key from a distorted image. Therefore we must restrict ourselves to using only a small number of bits, resulting in a low-entropy input.

In the following we propose two solutions that combine the CAPTCHA with a variant of IP puzzles in a way that either the user helps the client machine in solving the puzzle faster, or allows the client machine to use the solution at all. IP puzzles are known and described for example by D. Dean et al. in "Using client puzzles to protect TLS", Proceedings of the 10th USENIX Security Symposium, Washington, D.C., August 2001.

In fact, in the first scheme the puzzle-solving is helped by the human user, while the second scheme requires a correct solution of the CAPTHCA by the user.

In both schemes the client machine tries to obtain the key that is used by the server 103-1 or the authentication authority 113 to encrypt the tagging key.

Our proposals are scalable in the sense that a busy server 103-1 can select which effort, e. g. in computing cycles or waiting time a client computer has to invest in order to access the server.

The schemes make use of a preimage-resistant cryptographic hash function h (such as SHA-256) with

$$h: \ \{0,1\}^* \rightarrow \{0,1\}^n.$$

The hash function SHA-256 is described, for example, in National Institute of Standards and Technology (NIST), Computer Systems Laboratory. Secure Hash Standard. Federal Information Processing Standards Publication (FIPS PUB 180-2), February 2004.

We assume that h is either shared somehow between the client and the server or is otherwise public.

Furthermore it should be noted that due to the way the key transport schemes are integrated into the EC communication system, the schemes need to be realized as a single round, i.e. a single back-and-forth exchange of messages. The idea is to piggyback a client-to-server message, if existing, into an initial SYN packet, while the server-to-client message is integrated into the SYN-ACK packet. Preferably, we are using in-band communication.

With the two key transport schemes the system's designer or operator has a choice whether client machines shall be able to connect even though no human user stands essentially behind it. This choice might also be dependent on the current system and network load.

a) Scheme Helped by CAPTCHA Solution

In the first scheme, we are effectively realizing a differential work load for a client computer, i.e. a client computer and a human user working together have a vastly faster access to the tagging key than the machine alone.

Our IP puzzle works as follows. The server 103-1 or authentication authority 113 selects an $m<n$, i. e. the work factor, and a random string $r^*$ of length n. The value $r^*$ itself will not be transmitted to the client computer. Additionally the server computes

$$k_e \leftarrow h(c_p \| IP(S) \| IP(C) \| r^*)$$

and uses $k_e$ to encrypt the tagging key. Let $n_p=n-m$ denote the number of cleartext bits, $m_u$ the number of bits to be entered by the user, and $m_c$ the number of bits determined by the machine. We require $m_u+m_c=m$. Let $r^\wedge=[r^*]_{np}$, $r_c=[r^*]_{n-m+1,n-mu}$, and $r_u=[r^*]_{n-mu+1,n}$. Then $r^*=r^\wedge\|r_c\|r_u$.

The client is given the tuple

$$(r^{\hat{}}, s^*, C)$$

with

$$s^* = h(r^* \| IP(C) \| IP(S)),$$

$$C = Enc_{k_e}(k_t),$$

where $k_t$ is the tagging key to be transmitted.

In order to obtain the cleartext $k_t$, the client needs to find $r_c$ and $r_u$ in order to retrieve $r^*$. The client can check that it found a solution r by testing if

$$h(r \| IP(C) \| IP(S)) = s^*$$

Given that h is a cryptographic hash function that is providing some partial-input preimage resistance, this needs to be done by brute force. This allows us to roughly predict the average amount of computing time the client needs to invest. After finding $r^*$ the client can compute $k_e$ and decrypt $k_t$.

The CAPTCHA now plays into this by giving an additional hint on $r^*$ by providing $r_u$ in the form of a CAPTCHA, so that the user can type in $r_u$ into the client computer and thus effectively help the client computer to solve the puzzle and retrieve the tagging key.

b) Scheme Requiring a CAPTCHA Solution

A slight variation of the above scheme allows making sure that the client computer can make use of the solution to the client puzzle only if a human user provides the correct solution to the CAPTCHA. The client puzzle is very similar to the one given above.

Using the notation $r^*$, $r^\wedge$, $r_c$, $r_u$ established above, the server 103-1 selects, instead of $r^*$, a random $r^\wedge$, $r_c$, $r_u$, computes $r^\sim_u = [h(c\_u\|r\_u)]_{mu}$. Then we use $r^*=r^\wedge\|r_c\|r^\sim_u$ and

$$k_e \leftarrow h(c_p \| IP(S) \| IP(C) \| r^*) \oplus h(c_p' \| IP(S) \| IP(C) \| h(c_u' \| r_u))$$

as key to en- or decrypt $k_t$. Here $c_u$ and $c'_u$ are again two publicly known constants (differing also from the other constants used above). Like in the first key transport scheme, the user will be given $r_u$ in the form of a CAPTCHA. The crucial observation here is that the client is not provided a means to integrity check either $k_e$ or $k_t$ and therefore has no means to directly verify that the correct key has been found. This means that essentially the correct key is obtained only if both the correct solution to the IP puzzle and the CAPTCHA are known to the client computer.

c) Selection of Algorithms and Parameters

We propose a possible instantiation of our first scheme for key transport, the one realizing a differential work factor. We instantiate the 2nd preimage resistant hash function h with SHA-256. For the encryption function $Enc_k(.)$ we employ the block cipher AES with a 128-bit key; we obtain the key $k_e$ from the output of h by truncating the output to the required size.

The selection of $m_c$ and $m_u$ (and thus m) is critical for the security as well as the usability of the system. We assume that a graphical CAPTCHA consisting of characters and digits (and resolving some ambiguities such as '0' vs. 'O', '1' vs. '1') is acceptable. We use only the lowercase characters and convert uppercase letters if necessary. This will give us about 5 bit per character typed in by the user. In our opinion 4 characters or 20 bits in total should be acceptable. Furthermore, on a Pentium M (1.5GHz) system the implementation of SHA-256 runs at about $2^{18}$ operations per second.

This choice of $m_u=20$ results in a differential work factor of about $2^{20}$, so that a choice of $m_c=18$ and thus $m=38$ should be sufficient at the current time. Solving the puzzle with human help should need about 0.5 seconds on average on the machine given as reference above. The value of $m_c$ would need to be gradually increased in the future when vastly faster machines are commonplace.

3. Tagging Scheme

First, we recall the requirements that the tagging scheme performed by a client must fulfill in order to efficiently and securely work. Then we describe the concrete scheme, and provide some performance figures.

To explain the tagging scheme we assume that a client computer C wishing to communicate with a server $S$ behind the gate 109 has a cryptographic key $k_{c,s}$ that is specific to the client-server pair and possibly time-dependent or even session-dependent. Furthermore, we assume that the gate 109 itself does also know $k_{c,s}$, possibly by deriving it via the keying scheme from other information known to the gate 109.

a) Requirements

The purpose of the tagging scheme is to provide proof to the gate 109 about the authenticity of a packet sent from the client computer $C$ to the server $S$, as the gate sets -in the event of an attack or overload - the priority with which the packet is forwarded via the access network 107 to the server.

* Security. The tagging mechanism shall keep an adversary from learning the cryptographic key $k_{c,s}$ from the packets of a flow. Furthermore, an adversary shall be unable to reuse the tag from one packet to forge a valid tag for another packet, even if the adversary spoofs the client address as origin.
* Efficiency of verification. The gate 109 has to check every packet that is tagged, so the tagging scheme shall not impose too much computational overhead in order to keep latencies small.

It should be noted that the server $S$ or the authentication authority does not have to cope with generation or verification of tags.

b) The Concrete Scheme

For tagging a packet the tag generation means 116 of a client uses a special tag field in the IP header of a packet to be sent. The gate 109 will then look for available tags in received packets, check the tags, and for example base a decision about the packet's priority on this.

Given the requirements discussed above we employ a secure Message Authentication Code (MAC) scheme, i.e. a pair of possibly randomized algorithms *(Mac,* Ver) for tagging packets and verification, making use of parameters k and t for tagging key and tag lengths measured in bits:

$$Mac : \{0,1\}^k \times \{0,1\}^* \rightarrow \{0,1\}^t$$

$$Ver : \{0,1\}^k \times \{0,1\}^* \times \{0,1\}^l \rightarrow \{0,1\}$$

with *Ver(k, M, Mac(k, M))* $\Rightarrow$ 1.

In the following we describe the tagging and verification scheme based on these functions.

First we describe which data from a packet P is included in the tag computation and verification. Here we distinguish between IPv4 and IPv6: For a given packet P, we use the tuples

$$M_{hdr}(P) \leftarrow \begin{cases} IP_s(P), IP_d(P), Len(P), Ident(P)) & IPv4 \\ IP_s(P), IP_d(P), Len(P), Flow(P) & IPv6 \end{cases}$$

and for a TCP packet

$$M_{tcp}(P) \leftarrow (Port_s(P), Port_d(P), Seq(P), Ack(P))$$

(or $M_{tcp}(P) \leftarrow ()$ for non-TCP packets) to set up the input to the tagging and verification operations as

$$M(P) \leftarrow (M_{hdr}(P), M_{tcp}(P))$$

For IPv4 the maximal total size of *M(P)* is 12+12 octets or 96+96=192 bits, for IPv6 these numbers are 37+12=49 octets resp. 296+96=392 bits (where we count *Flow(P)* as 3 octets or 24 bits).

Now the procedures for computing a tag at the client 101-1 and for checking a tag at gate 109 are as follows:

* The client tries to retrieve from its internal key storage the tagging key for each packet P it sends to the server:

$$k \leftarrow \texttt{client\_get\_session\_key(IP_d(P)).}$$

If no tagging key is available, the packet is sent untagged. Otherwise the client sets up M(P), computes

$$\tau(P) \leftarrow \texttt{Mac(k,M(P)),}$$

and includes $\tau(P)$ in P using the tag option.

* The gate 109 maintains a label (cfg. Fig.5)

$$\lambda(P) \in \texttt{\{Untagged, Invalid, Valid\}}$$

for each packet for further queuing decisions, determined as follows. If a packet P is not tagged

$$\lambda(P) \leftarrow \texttt{Untagged.}$$

If a packet P carries a tag option, the gate obtains

$$k \leftarrow \texttt{gate\_get\_session\_key(IP}_s(P)\texttt{, IP}_d(P)\texttt{)}.$$

If no tagging key is available $\lambda(P) \leftarrow$ Invalid. Otherwise the gate extracts the alleged tag r'(P), obtains $M(P)$ from the other packet information as described above, and computes

$$b \leftarrow Ver(k, M(P), \tau'(P)),$$

Then

$$\lambda(P) \leftarrow \begin{cases} Valid & b = 1 \\ Invalid & b = 0 \end{cases}$$

Based on the label the gate 109 decides what further to do with the packet, e.g. forward it with high or low priority, or drop it entirely. Note, however, that dropping of SYN packets is not a good idea, as it would essentially prevent the server to be reachable.

d) Selection of Algorithms and Parameters

For implementing the MAC scheme several straight-forward choices are available, such as CBC-MAC with various block ciphers or the HMAC construction, e.g. HMAC-SHA1. This choice directly affects the natural key size and maximal tag length of our scheme. For IPv4 $M(P)$ fits into two AES blocks, so using CBC-MAC with AES would require just two encryption operations, while for IPv6 four encryption operations would be needed. In both cases HMAC-SHA1 would need, depending on implementation, 2 or 4 compression function operations, so we chose CBC-MAC with AES and a 128 bit key.
We shorten the output of 128 bits to the first 80 bits of tag data, so that the option for IPv4, including option type and length, has a total length of 96 bits or 12 octets. This still offers a level of security against an adversary that is appropriate for our purpose.

**Claims**

1. A method for identifying and controlling unsolicited traffic in a computer network system (10), which comprises at least a first access network (105, 105a, 105b) connecting at least one source (101-1 to 101-N; 102-1 to 102-N) to a core network (104) and at least a second access network (107) connecting at least one destination (103-1 to 103-N) to said core network (104), wherein said method comprises the steps:

   - directing traffic units addressed to at least one destination (103-1) from the at least one source (101-1) to the gate (109) which is interconnected between the core network (104) and the second access network (107);
   - verifying each traffic unit at the gate (109) to determine whether or not the traffic unit has been marked validly;
   - identifying each traffic unit (112) as unsolicited if it has been marked invalidly or if it has not been marked at all;
   - controlling the flow of each traffic unit (112) having been identified as unsolicited in response to at least one predetermined system parameter, **characterized in that**
   - a permission message is generated and transmitted to the at least one source (101-1);
   - traffic units to be sent are marked at the source using information from the permission message; and
   - information relating to the permission message is stored at the gate (104) to allow the gate to verify traffic units, wherein
   the permission message includes a tagging key used to mark traffic units to be sent at the source, and wherein the permission message is transmitted in form of a challenge to be solved by the at least one source to obtain the tagging key, wherein the challenge is solved at the source only with an interaction of a human user.

2. A method for identifying and controlling unsolicited traffic in a computer network system, which comprises at least a first access network (105) connecting at least one source ((101-1 to 101-N; 102-1 to 102-N) to a core network (104) and at least a second access network (107) connecting at least one destination (103-1 to 103-N) to said core network (104), wherein said method comprises the steps:

- directing traffic units addressed to at least one destination (103-1) from the at least one source (103-1) to the gate (109) which is interconnected between the core network (104) and the first access network (105);
- verifying each traffic unit at the gate (109) to determine whether or not the traffic unit has been marked validly;
- identifying each traffic unit (112) as unsolicited if it has been marked invalidly or if it has not been marked at all;
- controlling flow of each traffic unit having been identified as unsolicited in response to at least one predetermined system parameter, **characterized in that**
- a permission message is generated and transmitted to the at least one source (101-1);
- traffic units to be sent are marked at the source using information from the permission message; and
- information relating to the permission message is stored at the gate (104) to allow the gate to verify traffic units, wherein

the permission message includes a tagging key used to mark traffic units to be sent at the source, and wherein the permission message is transmitted in form of a challenge to be solved by the at least one source to obtain the tagging key, wherein the challenge is solved at the source only with an interaction of a human user.

3. The method according to claim 1 or 2, wherein
the traffic units are IP packets or TCP packets and wherein the core network (104) is the Internet.

4. The method according to any one of the claims 1 to 3, wherein the step of controlling comprises the following steps:

blocking, delaying and/or limiting flow of each traffic unit having been identified as unsolicited to a destination (103-1 to 103-N) in dependence of the congestion condition of the core network (104) and/or second access network (107).

5. The method of any one of the preceding claims, wherein a CAPTCHA algorithm and/or an IP puzzle algorithm are used to generate a challenge to transmit the permission message to the at least one source.

6. The method of any one of the preceding claims, wherein the tagging key is used in a message authentication code (MAC) to compute a tag to mark traffic units, wherein the tagging key or information to derive the tagging key is stored at the gate.

7. The method of claim 6, wherein the tagging key is a cryptographic key that is used by the source to generate tags for marking traffic units and that is used by the gate to verify tags included in traffic units.

8. The method according to any one of the claims 1 to 7, wherein the permission message is generated by the gate (104) and forwarded to an authentication means (113) which in turn transmits the permission message to the at least one source.

9. The method according to any one of the claims 1 to 7, wherein the permission message is generated by an authentication means (113) which transmits the permission message to the at least one source and the gate.

10. A computer network system for identifying and controlling unsolicited traffic, comprising
a core network (104),
at least a first access network (105; 105a, 105b),
at least one source (101-1 to 101-N; 102-1 to 102-N) connected to said first access network (105; 105a, 105b),
at least a second access network (107),
at least one destination (103-1 to 103-N) connected to said second access network (107),
at least one gate (109) located between the first access network (105; 105a, 105b) and the core network (104) and/or between the second access network (107) and the core network (104),
means (113; 114)) for generating and transmitting a permission message to the at least one source (101-1 to 101-N; 102-1 to 102-N), wherein
the at least one source (101-1 to 101-N; 102-1 to 102-N) comprises means (116) for obtaining a tagging key from that permission message used to mark traffic units addressed to a destination,
the gate (109) comprises:

- storage means for storing information related to a permission message,

- means (117) for verifying received traffic units on the basis of the information stored to determine whether or not the traffic units are marked validly,
- means (117) for identifying each traffic unit being marked invalidly as unsolicited, and
- means (117) for controlling the flow of each traffic unit being marked invalidly in response to at least one predetermined system parameter, **characterized in that** the means for generating and transmitting a permission message to the at least one source is implemented in an authentication unit (113) which is located in a device connected to the gate (104) or in at least one destination, wherein the authentication unit (113) is adapted to generate a permission message in form of a challenge to be solved by the at least one source, wherein only sources (101-1 to 101-N) having solved the challenge are able to mark traffic units validly, wherein the challenge is solved at the source only with an interaction of a human user.

11. The computer network system according to claim 10, wherein each source (101-1 to 101-N; 102-1 to 102-N) comprises a client computer, each destination (103-1 to 103-N) comprises a server and wherein the core network (104) is the Internet.

**Patentansprüche**

1. Verfahren zum Identifizieren und Steuern von unerwünschtem Datenverkehr in einem Computernetzsystem (10), das mindestens ein erstes Zugangsnetz (105, 105a, 105b) umfasst, das mindestens eine Quelle (101-1 bis 101-N; 102-1 bis 102-N) mit einem Kernnetz (104) verbindet, und mindestens ein zweites Zugangsnetz (107), das mindestens ein Ziel (103-1 bis 103-N) mit dem Kernnetz (104) verbindet, wobei das Verfahren folgende Schritte umfasst:

   - Leiten von Verkehrseinheiten, die an mindestens ein Ziel (103-1) adressiert sind, von der mindestens einen Quelle (101-1) zu dem Gate (109), das zwischen das Kernnetz (104) und das zweite Zugangsnetz (107) geschaltet ist,
   - Verifizieren jeder Verkehrseinheit an dem Gate (109), um festzustellen, ob die Verkehrseinheit als gültig markiert worden ist oder nicht,
   - Identifizieren einer jeweiligen Verkehrseinheit (112) als unerwünscht, wenn diese als ungültig markiert worden ist oder wenn diese überhaupt nicht markiert worden ist,
   - Steuern des Flusses jeder Verkehrseinheit (112), die als unerwünscht identifiziert worden ist, unter Ansprechen auf mindestens einen vorgegebenen Systemparameter,
   **dadurch gekennzeichnet, dass**
   - eine Zulassungsnachricht erzeugt und an die mindestens eine Quelle (101-1) übertragen wird,
   - zu sendende Verkehrseinheiten an der Quelle markiert werden, unter Verwendung von Informationen aus der Zulassungsnachricht, und
   - Informationen, die sich auf die Zulassungsnachricht beziehen, an dem Gate (109) gespeichert werden, um dem Gate zu ermöglichen, Verkehrseinheiten zu verifizieren, wobei
   - die Zulassungsnachricht einen Tagging-Schlüssel umfasst, der verwendet wird, um zu sendende Verkehrseinheiten an der Quelle zu markieren, und wobei die Zulassungsnachricht in Form einer Aufgabe übertragen wird, die durch die mindestens eine Quelle zu lösen ist, um den Tagging-Schlüssel zu erhalten, wobei sich die Aufgabe an der Quelle nur mit Interaktion eines menschlichen Benutzers lösen lässt.

2. Verfahren zum Identifizieren und Steuern von unerwünschtem Datenverkehr in einem Computernetzsystem, das mindestens ein erstes Zugangsnetz (105) umfasst, das mindestens eine Quelle (101-1 bis 101-N; 102-1 bis 102-N) mit einem Kernnetz (104) verbindet, und mindestens ein zweites Zugangsnetz (107), das mindestens ein Ziel (103-1 bis 103-N) mit dem Kernnetz (104) verbindet, wobei das Verfahren folgende Schritte umfasst:

   - Leiten von Verkehrseinheiten, die an mindestens ein Ziel (103-1) adressiert sind, von der mindestens einen Quelle (101-1) zu dem Gate (109), das zwischen das Kernnetz (104) und das erste Zugangsnetz (105) geschaltet ist,
   Verifizieren jeder Verkehrseinheit an dem Gate (109), um festzustellen, ob die Verkehrseinheit als gültig markiert worden ist oder nicht,
   - Identifizieren einer jeweiligen Verkehrseinheit (112) als unerwünscht, wenn diese als ungültig markiert worden ist oder wenn diese überhaupt nicht markiert worden ist,
   - Steuern des Flusses jeder Verkehrseinheit (112), die als unerwünscht identifiziert worden ist, unter Ansprechen auf mindestens einen vorgegebenen Systemparameter,
   **dadurch gekennzeichnet, dass**

- eine Zulassungsnachricht erzeugt und an die mindestens eine Quelle (101-1) übertragen wird,
- zu sendende Verkehrseinheiten an der Quelle markiert werden, unter Verwendung von Informationen aus der Zulassungsnachricht, und
- Informationen, die sich auf die Zulassungsnachricht beziehen, an dem Gate (109) gespeichert werden, um dem Gate zu ermöglichen, Verkehrseinheiten zu verifizieren, wobei
- die Zulassungsnachricht einen Tagging-Schlüssel umfasst, der verwendet wird, um zu sendende Verkehrseinheiten an der Quelle zu markieren, und wobei die Zulassungsnachricht in Form einer Aufgabe übertragen wird, die durch die mindestens eine Quelle zu lösen ist, um den Tagging-Schlüssel zu erhalten, wobei sich die Aufgabe an der Quelle nur mit Interaktion eines menschlichen Benutzers lösen lässt.

3. Verfahren nach Anspruch 1 oder 2, wobei die Verkehrseinheiten IP-Pakete oder TCP-Pakete sind und wobei das Kernnetz (104) das Internet ist.

4. Verfahren nach einem der Ansprüche 1 bis 3, wobei der Schritt des Steuerns folgende Schritte umfasst:

   Sperren, Verzögern und/oder Begrenzen des Flusses einer jeweiligen Verkehrseinheit, die für ein Ziel (103-1 bis 103-N) als unerwünscht identifiziert worden ist, in Abhängigkeit von dem Überlastungszustand des Kernnetzes (104) und/oder des zweiten Zugangsnetzes (107).

5. Verfahren nach einem der vorhergehenden Ansprüche, wobei ein CAPTCHA-Algorithmus und/oder ein IP-Puzzle-Algorithmus verwendet wird, um eine Aufgabe für die Übertragung der Zulassungsnachricht an die mindestens eine Quelle zu erzeugen.

6. Verfahren nach einem der vorhergehenden Ansprüche, wobei der Tagging-Schlüssel in einem Message Authentication Code (MAC) verwendet wird, um ein Tag zum Markieren von Verkehrseinheiten zu berechnen, wobei der Tagging-Schlüssel oder Informationen zum Ableiten des Tagging-Schlüssels an dem Gate gespeichert sind.

7. Verfahren nach Anspruch 6, wobei der Tagging-Schlüssel ein kryptografischer Schlüssel ist, der von der Quelle verwendet wird, um Tags zum Markieren von Verkehrseinheiten zu erzeugen, und der von dem Gate verwendet wird, um in den Verkehrseinheiten enthaltene Tags zu verifizieren.

8. Verfahren nach einem der Ansprüche 1 bis 7, wobei die Zulassungsnachricht von dem Gate (109) erzeugt wird und an eine Authentifizierungseinrichtung (113) weitergeleitet wird, die ihrerseits die Zulassungsnachricht an die mindestens eine Quelle überträgt.

9. Verfahren nach einem der Ansprüche 1 bis 7, wobei die Zulassungsnachricht von einer Authentifizierungseinrichtung (113) erzeugt wird, welche die Zulassungsnachricht an die mindestens eine Quelle und an das Gate überträgt.

10. Computernetzsystem zum Identifizieren und Steuern von unerwünschtem Datenverkehr, umfassend:

   ein Kernnetz (104),
   mindestens ein erstes Zugangsnetz (105; 105a, 105b),
   mindestens eine Quelle (101-1 bis 101-N; 102-1 bis 102-N), die mit dem ersten Zugangsnetz (105; 105a, 105b) verbunden ist,
   mindestens ein zweites Zugangsnetz (107),
   mindestens ein Ziel (103-1 bis 103-N), die mit dem zweiten Zugangsnetz (107) verbunden ist,
   mindestens ein Gate (109), das zwischen dem ersten Zugangsnetz (105; 105a, 105b) und dem Kernnetz (104) und/oder zwischen dem zweiten Zugangsnetz (107) und dem Kernnetz (104) angeordnet ist,
   Einrichtungen (113; 114) zum Erzeugen und Senden einer Zulassungsnachricht an die mindestens eine Quelle (101-1 bis 101-N; 102-1 bis 102-N), wobei
   die mindestens eine Quelle (101-1 bis 101-N; 102-1 bis 102-N) Einrichtungen (116) zum Erhalten eines Tagging-Schlüssels aus dieser Zulassungsnachricht umfasst,
   welcher verwendet wird, um Verkehrseinheiten zu markieren, die an ein Ziel adressiert sind, wobei das Gate (109) umfasst:

   - Speichereinrichtungen zum Speichern von Informationen, die sich auf eine Zulassungsnachricht beziehen,
   - Einrichtungen (117) zum Verifizieren von empfangenen Verkehrseinheiten auf Basis der gespeicherten Informationen, um festzustellen, ob die Verkehrseinheiten als gültig markiert sind,

- Einrichtungen (117) zum Identifizieren einer jeweiligen Verkehrseinheit, die als ungültig markiert ist, als unerwünscht, und

- Einrichtungen (117) zum Steuern des Flusses einer jeweiligen als ungültig markierten Verkehrseinheit unter Ansprechen auf mindestens einen vorgegebenen Systemparameter, **dadurch gekennzeichnet, dass** die Einrichtung zum Erzeugen und Übertragen einer Zulassungsnachricht an die mindestens eine Quelle in einer Authentifizierungseinheit (113) implementiert ist, die in einem mit dem Gate (104) verbundenen Bauelement oder in mindestens einem Ziel angeordnet ist,

wobei die Authentifizierungseinheit (113) dazu angepasst ist, eine Zulassungsnachricht zu erzeugen, und zwar in Form einer Aufgabe, die an der mindestens einen Quelle zu lösen ist, wobei nur Quellen (101-1 bis 101-N), welche die Aufgabe gelöst haben, Verkehrseinheiten als gültig markieren können, wobei sich die Aufgabe an der Quelle nur mit Interaktion eines menschlichen Benutzers lösen lässt.

11. Computernetzsystem nach Anspruch 10, wobei jede Quelle (101-1 bis 101-N; 102-1 bis 102-N) einen Client-Computer umfasst, jedes Ziel (103-1 bis 103-N) einen Server umfasst und wobei das Kernnetz (104) das Internet ist.


**Revendications**

1. Procédé permettant d'identifier et de contrôler un trafic non sollicité dans un système de réseau informatique (10), qui comprend au moins un premier réseau d'accès (105, 105a, 105b) reliant au moins une source (101-1 à 101-N ; 102-1 à 102-N) à un réseau central (104) et au moins un deuxième réseau d'accès (107) reliant au moins une destination (103-1 à 103-N) audit réseau central (104), où ledit procédé comprend les étapes qui consistent :

à diriger des unités de trafic adressées à au moins une destination (103-1) à partir de l'au moins une source (101-1) vers la porte (109) qui est interconnectée entre le réseau central (104) et le deuxième réseau d'accès (107) ;
à vérifier chaque unité de trafic au niveau de la porte (109) en vue de déterminer si l'unité de trafic a été marquée comme étant valide ou non ;
à identifier chaque unité de trafic (112) comme étant non sollicitée si elle a été marquée comme étant invalide ou si elle n'a pas été marquée du tout ;
à contrôler le flux de chaque unité de trafic (112) ayant été identifiée comme étant non sollicitée en réponse à au moins un paramètre système prédéterminé,
**caractérisé en ce qu'**un message d'autorisation est généré et transmis à l'au moins une source (101-1) ;
les unités de trafic devant être envoyées sont marquées au niveau de la source en utilisant des informations provenant du message d'autorisation ; et
des informations se rapportant au message d'autorisation sont stockées au niveau de la porte (104) pour permettre à cette dernière de vérifier des unités de trafic, où
le message d'autorisation comprend une clé d'étiquetage utilisée pour marquer des unités de trafic devant être envoyées au niveau de la source, et
où le message d'autorisation est transmis sous forme d'une épreuve que l'au moins une source doit résoudre pour obtenir la clé d'étiquetage, où seule l'intervention d'un utilisateur humain permet de résoudre l'épreuve au niveau de la source.

2. Procédé permettant d'identifier et de contrôler un trafic non sollicité dans un système de réseau informatique (10), qui comprend au moins un premier réseau d'accès (105) reliant au moins une source (101-1 à 101-N ; 102-1 à 102-N) à un réseau central (104) et au moins un deuxième réseau d'accès (107) reliant au moins une destination (103-1 à 103-N) audit réseau central (104), où ledit procédé comprend les étapes qui consistent :

à diriger des unités de trafic adressées à au moins une destination (103-1) à partir de l'au moins une source (103-1) vers la porte (109) qui est interconnectée entre le réseau central (104) et le premier réseau d'accès (105) ;
à vérifier chaque unité de trafic au niveau de la porte (109) pour déterminer si l'unité de trafic a été marquée comme étant valide ou non ;
à identifier chaque unité de trafic (112) comme étant non sollicitée si elle a été marquée comme étant invalide ou si elle n'a pas été marquée du tout ;
à contrôler le flux de chaque unité de trafic ayant été identifiée comme étant non sollicitée en réponse à au moins un paramètre système prédéterminé,

**caractérisé en ce qu'**un message d'autorisation est généré et transmis à l'au moins une source (101-1) ;
les unités de trafic devant être envoyées sont marquées au niveau de la source en utilisant des informations provenant du message d'autorisation ; et
des informations se rapportant au message d'autorisation sont stockées au niveau de la porte (104) pour permettre à cette dernière de vérifier des unités de trafic, où
le message d'autorisation comprend une clé d'étiquetage utilisée pour marquer des unités de trafic à envoyer au niveau de la source, et
où le message d'autorisation est transmis sous forme d'une épreuve que l'au moins une source doit résoudre pour obtenir la clé d'étiquetage, où seule l'intervention d'un utilisateur humain permet de résoudre l'épreuve au niveau de la source.

3. Procédé selon la revendication 1 ou 2, dans lequel les unités de trafic sont des paquets IP ou des paquets TCP et où le réseau central (104) est l'Internet.

4. Procédé selon l'une quelconque des revendications 1 à 3, dans lequel l'étape de contrôle comprend les étapes suivantes qui consistent :

à bloquer, retarder et/ou limiter le flux de chaque unité de trafic ayant été identifiée comme étant non sollicitée à une destination (103-1 à 103-N) en fonction de l'état de congestion du réseau central (104) et/ou du deuxième réseau d'accès (107).

5. Procédé de l'une quelconque des revendications précédentes, dans lequel un algorithme CAPTCHA et/ou un algorithme de puzzles d'adresses IP sont utilisés pour générer une épreuve pour transmettre le message d'autorisation à l'au moins une source.

6. Procédé de l'une quelconque des revendications précédentes, dans lequel la clé d'étiquetage est utilisée dans un code d'authentification de message (MAC) pour calculer une étiquette pour marquer des unités de trafic ;
où la clé d'étiquetage ou les informations destinées à dériver la clé d'étiquetage est/sont stockée(s) au niveau de la porte.

7. Procédé de la revendication 6, dans lequel la clé d'étiquetage est une clé cryptographique qui est utilisée par la source pour générer des étiquettes pour le marquage des unités de trafic et qui est utilisée par la porte pour vérifier des étiquettes comprises dans les unités de trafic.

8. Procédé selon l'une quelconque des revendications 1 à 7, dans lequel le message d'autorisation est généré par la porte (104) et transféré à un moyen d'authentification (113) qui transmet à son tour le message d'autorisation à l'au moins une source.

9. Procédé selon l'une quelconque des revendications 1 à 7, dans lequel le message d'autorisation est généré par un moyen d'authentification (113) qui transmet le message d'autorisation à l'au moins une source et la porte.

10. Système de réseau informatique permettant d'identifier et de contrôler un trafic non sollicité, comprenant
un réseau central (104),
au moins un premier réseau d'accès (105 ; 105a, 105b),
au moins une source (101-1 à 101-N ; 102-1 à 102-N) reliée audit premier réseau d'accès (105 ; 105a, 105b),
au moins un deuxième réseau d'accès (107),
au moins une destination (103-1 à 103-N) reliée audit deuxième réseau d'accès (107),
au moins une porte (109) située entre le premier réseau d'accès (105 ; 105a, 105b) et le réseau central (104) et/ou entre le deuxième réseau d'accès (107) et le réseau central (104),
un moyen (113 ; 114) destiné à générer et à transmettre un message d'autorisation à l'au moins une source (101-1 à 101-N ; 102-1 à 102-N), où
l'au moins une source (101-1 à 101-N ; 102-1 à 102-N) comprend un moyen (116) destiné à obtenir une clé d'étiquetage à partir du message d'autorisation utilisée pour marquer les unités de trafic adressées à une destination,
la porte (109) comprend :

un moyen de stockage destiné à stocker des informations se rapportant à un message d'autorisation,
un moyen (117) destiné à vérifier les unités de trafic reçues sur la base des informations stockées pour déterminer si les unités de trafic sont marquées comme étant valides ou non,

EP 1 845 468 B1

un moyen (117) destiné à identifier comme non sollicitée chaque unité de trafic marquée comme étant invalide, et un moyen (117) destiné à contrôler le flux de chaque unité de trafic qui est marquée comme étant invalide en réponse à au moins un paramètre système prédéterminé, **caractérisé en ce que** le moyen de génération et de transmission d'un message d'autorisation à l'au moins une source est mis en oeuvre dans une unité d'authentification (113) qui est située dans un dispositif relié à la porte (104) ou dans au moins une destination, où l'unité d'authentification (113) est adaptée pour générer un message d'autorisation sous forme d'épreuve que l'au moins une source doit résoudre, où seules les sources (101-1 à 101-N) ayant résolu l'épreuve peuvent marquer des unités de trafic comme étant valides, où seule l'intervention d'un utilisateur humain permet de résoudre l'épreuve au niveau de la source.

11. Système de réseau informatique selon la revendication 10, dans lequel chaque source (101-1 à 101-N ; 102-1 à 102-N) comprend un ordinateur client, chaque destination (103-1 à 103-N) comprend un serveur et où le réseau central (104) est l'Internet.

Fig. 1

Fig. 2

101-1 ... 101-N

115

113

Authentication authority

105a

Access network

Legitimate sources (clients)

114

111

110

109

107

Core network

Gate

111

Access network

Servers

104

112

112

103-1...103-N

Access network

105b

102-1 ... 102-N

EP 1 845 468 B1

Destinations (web server)

103-1....103-N

Core network

104

Authentication authority

113

114

111

112

Gate

109

110

115

Access network

105

111

Legitimate sources (clients)

101-1 .... 101-N

Malicious sources (zombies)

112

102-1 .... 102-N

Fig. 3

Fig. 4

EP 1 845 468 B1

Fig. 5

EP 1 845 468 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1284558 B1

- US 2004230797 A

### Non-patent literature cited in the description

- **Y. KIM et al.** Packetscore: statistics-based overload control against distributed denial-of-service attacks. *Proceedings of IEEE INFOCOM'04,* March 2004
- **S. SAVAGE et al.** Network support for IP-traceback. *IEEE/ACM Transactions on Networking,* June 2001, vol. 9 (3), 226-237
- **A. YAAR et al.** A stateless internet flow filter to mitigate DDoS flooding attacks. *Proceedings of the IEEE Symposium on Security and Privacy,* May 2004
- **X. YANG et al.** A DoS-limiting network architecture. *ACM SIGCOMM'05,* August 2005
- **T. ANDERSON et al.** Preventing Internet Denial-of-Service with capabilities. *Proceedings of Hot Topics in Networking (HotNetsII,* October 2003

- CAPTCHA: Using Hard AI Problems for Security. **L. V. AHN et al.** Advances in Cryptology-EUROCRYPT 2003. 2003, vol. 2656, 294-311
- **D. DEAN et al.** Using client puzzles to protect TLS. *Proceedings of the 10th USENIX Security Symposium,* August 2001
- **M. BELLARE et al.** The security of the cipher block chaining message authentication code. *Journal of Computer and Systems Sciences,* December 2000, vol. 61 (3), 362-399
- CHAPTCHA: Using Hard AI Problems for Security. **L.V.AHN et al.** Advances in Cryptology-EUROCRYPT 2003. Springer Verlag, 2003, vol. 2656, 294-311
- Secure Hash Standard. Federal Information Processing Standards Publication. National Institute of Standards and Technology, February 2004